# EUROPÄISCHE PATENTANMELDUNG

(11) **EP 1 270 889 A2**
(43) Veröffentlichungstag der Anmeldung: **02.01.2003**
(21) Anmeldenummer: 02009997.4
(22) Anmeldetag: 04.05.2002
(51) Int. Cl.: F01N 7/08, F16L 27/10, B60K 13/04

(54) **Abgasbauteil für ein Kraftfahrzeug**

(30) Priorität: 28.06.2001 DE 10130668
(71) Anmelder: J. Eberspächer GmbH & Co. KG, 73730 Esslingen (DE)
(72) Erfinder: Nording, Thomas, 73734 Esslingen (DE)

(57) **Zusammenfassung**

Bei einem Abgasbauteil (1) für ein Kraftfahrzeug (17) mit einem Abgaseinlaß (3), einem Abgasauslaß (5) und einem Schwingungsentkopplungselement (7) steht das Schwingungsentkopplungselement (7) bei Temperaturen außerhalb des Betriebstemperaturbereichs des Abgasbauteils (1) unter Zug- und/oder Scherspannung.

## Beschreibung

Die Erfindung betrifft ein Abgasbauteil für ein Kraftfahrzeug nach dem Oberbegriff von Anspruch 1, ein Kraftfahrzeug mit einem derartigen Abgasbauteil sowie ein Verfahren zum Einbau eines derartigen Abgasbauteils in ein Kraftfahrzeug nach dem Oberbegriff von Anspruch 9.

Aus der DT 25 04 544 A1 ist ein gattungsgemäßes Abgasbauteil mit einem Abgaseinlaß, einem Abgasauslaß und einem Schwingungsentkopplungselement bekannt. Das Schwingungsentkopplungselement dient insbesondere dazu, die ungehinderte Ausbreitung von motorbedingten Vibrationen in die gesamte Abgasanlage bzw. das gesamte Abgasbauteil und damit möglicherweise auch in den Fahrgastbereich des Kraftfahrzeugs zu verhindern. Derartige Schwingungsentkopplungselemente einer Abgasanlage sind grundsätzlich hochbeanspruchte Baukomponenten.

Aufgabe der Erfindung ist es, ein gattungsgemäßes Abgasbauteil mit verbessertem Schwingungsentkopplungselement bereitzustellen.

Diese Aufgabe wird erfindungsgemäß dadurch gelöst, daß das Schwingungsentkopplungselement bei Temperaturen außerhalb des Betriebstemperaturbereichs des Abgasbauteils unter Spannung, insbesondere Zug- und/oder Scherspannung steht.

Denn dadurch kann das Schwingungsentkopplungselement bei den hohen Betriebstemperaturen des Abgasbauteils unter Kompensation der temperaturbedingten Längenausdehnung des gesamten Abgasbauteils bzw. der gesamten Abgasanlage entspannt sein. Erfindungsgemäß arbeitet das Schwingungsentkopplungselement also gerade unter seinen Betriebsbedingungen im wesentlichen spannungsfrei. Dadurch kann die Beanspruchung des Schwingungsentkopplungselements verringert und somit die Lebensdauer der Abgasanlage erhöht werden. Ferner kann dadurch auch auf separate Baukomponenten zur Kompensation der temperaturbedingten Längenausdehnung verzichtet werden, was insbesondere im Hinblick auf Gewicht und Kosten der Abgasanlage vorteilhaft ist.

Abgasbauteil im Sinne der Erfindung kann sowohl die gesamte Abgasanlage eines Kraftfahrzeugs als auch eine Komponente einer Abgasanlage bedeuten.

Falls das Abgasbauteil oder die Abgasanlage, in welche das Abgasbauteil eingebaut wird, kollinar ist, wird das Schwingungsentkopplungselement außerhalb des Betriebstemperaturbereichs vorzugsweise lediglich einer Zugspannung ausgesetzt. Falls das Abgasbauteil bzw. die Abgasanlage Krümmungsabschnitte umfaßt, kann das Schwingungsentkopplungselement geeigneterweise auch unter Scherspannung stehen.

Wenn das Schwingungsentkopplungselement einen Wellschlauch, ein Schlauchgelenk oder ein Balgabkoppelelement umfaßt, steht eine breite Palette relativ ausgereifter, auf dem Markt erhältlicher Komponenten zur Verfügung.

Bei einer vorteilhaften Ausführungsform ist das Schwingungsentkopplungselement zwischen dem Abgaseinlaß und dem Abgasauslaß, vorzugsweise in dem abgaseinlaßnahen Bereich des Abgasbauteils angeordnet. Dadurch ergeben sich im Kraftfahrzeug besonderes günstige Verhältnisse zwischen Schwingungsentkopplung und Wärmeausdehnungskompensation innerhalb der Abgasanlage.

Ein weiterer Gesichtspunkt der Erfindung betrifft ein Kraftfahrzeug mit dem beschriebenen Abgasbauteil. Dabei kann aufgrund des erfindungsgemäßen Abgasbauteils das Endrohr der Abgasanlage relativ zum Kraftfahrzeug in optisch ansprechender Weise über einen weiten Temperaturbereich stets die selbe definierte Lage einnehmen. Dazu ist das Abgasbauteil im Bereich des Abgasauslaßes relativ zum Kraftfahrzeug vorzugsweise unverlagerbar am Kraftfahrzeug angeordnet.

Im Hinblick auf das Schwingungsverhalten und die temperaturbedingte Längenausdehnung der Abgasanlage ist es günstig, wenn das Abgasbauteil im Bereich des Abgaseinlasses und/oder in der Nähe des Schwingungsentkopplungselements relativ zum Kraftfahrzeug verlagerbar am Kraftfahrzeug angeordnet ist.

Ein weiterer Gesichtspunkt der Erfindung liegt in einem Verfahren zum Einbau eines Abgasbauteils in ein Kraftfahrzeug, bei dem das Abgasbauteil mit vorgespanntem Schwingungsentkopplungselement in das Kraftfahrzeug eingebaut wird. Da die Einbautemperatur grundsätzlich erheblich niedriger ist als die Betriebstemperatur der Abgasanlage, kann das Schwingungsentkopplungselement gerade durch die temperaturbedingten Längenänderungen der Abgasanlage beim Erreichen der Betriebstemperatur dann spannungsfrei arbeiten.

Bei einer Ausführungsform des erfindungsgemäßen Verfahrens wird das Abgasbauteil mit einem das Schwingungsentkopplungselement unter Zug- und/oder Schervorspannung setzenden Spreizelement zur Montage geliefert und zusammen mit dem Spreizelement an dem Kraftfahrzeug angebracht. Erst danach wird das Spreizelement entfernt. Dadurch kann die Vorspannung des Schwingungsentkopplungselements besonders zuverlässige eingehalten und/oder einjustiert bzw. geregelt oder gesteuert werden.

Die Erfindung wird im folgenden an einem Ausführungsbeispiel anhand der beiliegenden Figuren erläutert. Es zeigen:
Fig. 1 eine schematische Perspektivdarstellung einer Ausführungsform des erfindungsgemäßen Abgasbauteils und
Fig. 2 eine schematische Darstellung einer Ausführungsform des erfindungsgemäßen Kraftfahrzeugs.

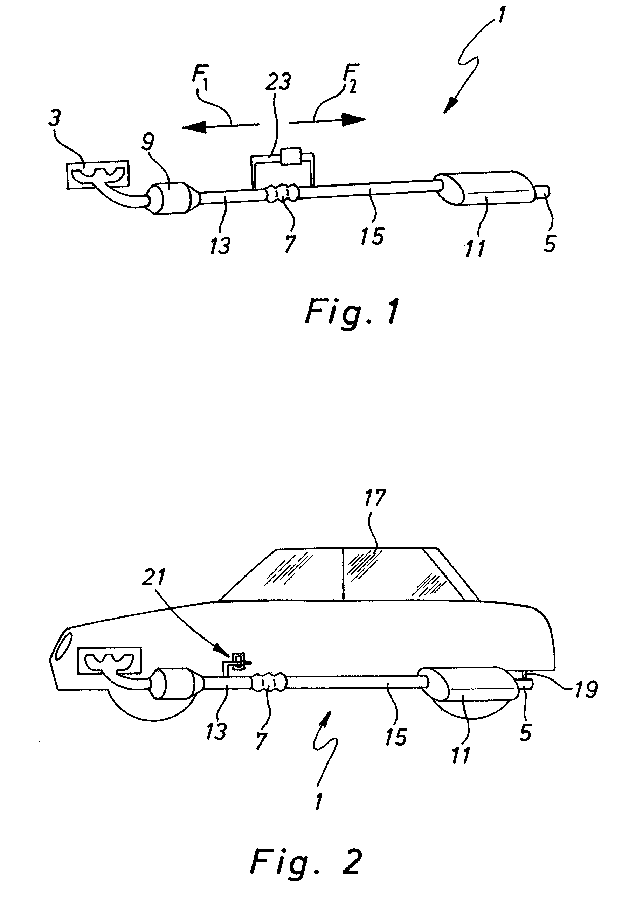

Fig. 1 zeigt beispielhaft ein Abgasbauteil 1 mit einem als Abgaskrümmer ausgebildeten Abgaseinlaß 3 und einem in diesem Ausführungsbeispiel als Endrohr ausgebildeten Abgasauslaß 5 sowie einem dazwischen angeordneten, als Wellschlauch ausgebildeten Schwingungsentkopplungselement 7. Das Abgasbauteil 1 umfaßt ferner einen motornahen Katalysator 9 und einen abgasauslaßnahen Schalldämpfer 11, welche über ein Abgasrohr 13 bzw. 15 mit dem Schwingungsentkopplungselement 7 verbunden sind.

Das in Fig. 1 dargestellte Abgasbauteil 1 ist also die gesamte Abgasanlage. Ein erfindungsgemäßes Abgasbauteil kann aber auch lediglich einen Teilbereich der gesamten Abgasanlage umfassen, z. B. das Schwingungsentkopplungselement mit den angrenzenden Rohrstücken.

Die Spannung, unter der das Schwingungsentkopplungselement 7 bei Temperaturen außerhalb des Betriebstemperaturbereichs des Abgasbauteils 1, also z. B. bei normalen Umgebungstemperaturen, steht, wird in Fig. 1 durch eine diese Spannung bewirkende, am abgaseingangsseitigen Ende des Schwingungsentkopplungselements 7 angreifende und zum Abgaseinlaß 3 gerichtete Kraft F₁ sowie durch eine am abgasauslaßseitigen Ende des Schwingungsentkopplungselements 7 angreifende und zum Abgasauslaß gerichtete Kraft F₂ dargestellt.

In Fig. 2 ist ein Kraftfahrzeug 17, in dem das Abgasbauteil 1 eingebaut ist, schematisch dargestellt.

Es ist zu erkennen, daß der Abgasauslaß 5 mittels eines Befestigungsteils 19 unverlagerbar am Kraftfahrzeug 17 angeordnet ist. Im Bereich des Abgasrohrs 13 hingegen ist das Abgasbauteil 1 über eine Relativbewegungen zwischen Abgasbauteil 1 und übrigem Kraftfahrzeug 17 zulassende Verbindungseinrichtung 21 an dem Kraftfahrzeug 17 angeordnet.

Dadurch können sich sowohl der abgaseinlaßseitige Abgasbauteilbereich mit Katalysator 9 und Abgasrohr 13 als auch der abgasauslaßseitige Abgasbauteilbereich mit dem Schalldämpfer 11 und dem Abgasrohr 15 in der Warmlaufphase des Kraftfahrzeugs 17 in Richtung auf das Schwingungsentkopplungselement 7 ausdehnen und das Schwingungsentkopplungselement 7 bei Betriebstemperatur trotzdem im wesentlichen spannungsfrei arbeiten.

In Fig. 1 ist ferner ein Spreizelement 23 dargestellt, welches beidseits des Schwingungsentkopplungselements 7 an den Rohrabschnitten 13 und 15 angreifend das Anlegen der Kräfte F₁ und F₂ an das Schwingungsentkopplungselement 7 ermöglicht und nach Einbau des Abgasbauteils 1 in das Kraftfahrzeug 17 entfernt wird.

## Patentansprüche

1. Abgasbauteil (1) für ein Kraftfahrzeug (17) mit einem Abgaseinlaß (3), einem Abgasauslaß (5) und einem Schwingungsentkopplungselement (7),
**dadurch gekennzeichnet, daß**
bei Temperaturen außerhalb des Betriebstemperaturbereichs des Abgasbauteils (1) das Schwingungsentkopplungselement (7) unter Spannung steht.

2. Abgasbauteil (1) nach Anspruch 1, wobei das Schwingungsentkopplungselement (7) unter Zug- und/oder Scherspannung steht.

3. Abgasbauteil (1) nach Anspruch 1 oder 2, wobei das Schwingungsentkopplungselement (7) einen Wellschlauch umfaßt.

4. Abgasbauteil (1) nach einem der Ansprüche 1 bis 3, wobei das Schwingungsentkopplungselement (7) zwischen dem Abgaseinlaß (3) und dem Abgasauslaß (5) angeordnet ist.

5. Abgasbauteil (1) nach Anspruch 4, wobei das Schwingungsentkopplungselement (7) in dem abgaseinlaßnahen Bereich des Abgasbauteils (1) angeordnet ist.

6. Kraftfahrzeug (17) mit einem Abgasbauteil (1) nach einem der Ansprüche 1 bis 5.

7. Kraftfahrzeug (17) nach Anspruch 6, wobei das Abgasbauteil (1) im Bereich des Abgasauslasses (5) relativ zum Kraftfahrzeug (17) unverlagerbar am Kraftfahrzeug (17) angeordnet ist.

8. Kraftfahrzeug (17) nach Anspruch 6 oder 7, wobei das Abgasbauteil (1) im Bereich des Abgaseinlasses (3) und/oder in der Nähe des Schwingungsentkopplungselements (7) relativ zum Kraftfahrzeug (17) verlagerbar am Kraftfahrzeug (17) angeordnet ist.

9. Verfahren zum Einbau eines Abgasbauteils (1) mit einem Abgaseinlaß (3), einem Abgasauslaß (5) und einem Schwingungsentkopplungselement (7) in ein Kraftfahrzeug (17),
**dadurch gekennzeichnet, daß**
das Abgasbauteil (1) mit vorgespanntem Schwingungsentkopplungselement (7) in das Kraftfahrzeug (17) eingebaut wird.

10. Verfahren nach Anspruch 9, wobei
das Abgasbauteil (1) mit einem das Schwingungsentkopplungselement (7) unter Zug- oder/und Schervorspannung setzenden Spreizelement (23) zur Montage geliefert wird,
das Abgasbauteil (1) zusammen mit dem Spreizelement (23) an dem Kraftfahrzeug (17) angebracht wird
und das Spreizelement (23) danach entfernt wird.
